# EUROPEAN PATENT SPECIFICATION

(11) **EP 4 254 243 B1**
(45) Date of publication and mention of the grant of the patent: **23.10.2024**
(21) Application number: 23162545.0
(22) Date of filing: 17.03.2023
(51) Int. Cl.: G06F 21/60, H04L 9/40

(54) **SECURE TIME SYNCHRONIZATION**
SICHERE ZEITSYNCHRONISATION
SYNCHRONISATION TEMPORELLE SÉCURISÉE

(30) Priority: 31.03.2022 US 202263325996 P; 14.03.2023 US 202318121089
(43) Date of publication of application: 04.10.2023
(73) Proprietor: Baker Hughes Oilfield Operations LLC, Houston, TX 77073 (US)
(72) Inventor: HESS, Dustin, Houston 77073 (US); RICHETTA, Paul, Houston 77073 (US)
(74) Representative: Novagraaf Group

(56) References cited:
- WO-A1-2015/049138
- US-B1- 9 853 949

## Description

### CROSS-REFERENCE TO RELATED APPLICATIONS

The present application claims priority to U.S. Provisional Patent Appl. No. 63/325,996 to Hess et al., filed March 31, 2022, and entitled "Secure Time Synchronization,".

### TECHNICAL FIELD

This disclosure relates generally to data processing and, in particular, to synchronizing operational parameters of an industrial machine with encrypted time.

### BACKGROUND

Many industries, such as hydrocarbon exploration and power generation, can rely heavily upon continuous operation of machinery. In industrial environments, failure of machines can incur significant costs, due to repair expenses as well as loss of production and potential injury to workers. Considering machine failure risks, operating parameters of machine components (e.g., position, vibration, temperature, speed, etc.) can be monitored to detect potential machine failures and to prevent or timely address machine failures. Monitoring of operating parameters of machine components can provide long term benefits such as lower production costs, reduced equipment down time, improved reliability, and enhanced safety. Prior art documents WO2015/049138A1 and US 9853949B1 focuse on putting a timestamp on data objects and then encrypting the entire package.

### SUMMARY

In some implementations, a method incudes receiving data characterizing a plurality of operating parameters associated with an industrial machine, and receiving data characterizing a plurality of encrypted time. The method also includes identifying a first encrypted time from the plurality of encrypted times based on temporal location of the first encrypted time relative to a first system time of a plurality of system time. A first operating parameter of the plurality of operating parameters is received at the first system time. The method further includes generating an operating data set including at least the first operating parameter and a new encrypted time based at least on the identified first encrypted time. The new encrypted time is tagged to the first operating parameter. The method also includes providing the operating data set.

One or more of the following features can be included in any feasible combination.

In some implementations, the method further includes identifying a second encrypted time from the plurality of encrypted times based on temporal location of the second encrypted time relative to a first system time. The first encrypted time is received at a second system time and the second encrypted time is received at a third system time. The method further includes determining an interpolated encrypted time associated with a first system time at least based on the first encrypted time and the second encrypted time. The method also includes setting the new encrypted time to the interpolated encrypted time. In some implementations, the first system time is temporally located between the second system time and the third system time. In some implementations, the first encrypted time is received at the first system time, and the new encrypted time is set to the first encrypted time.

In some implementations, the method further includes generating, by an encryption algorithm, the first plurality of encryption times. The encryption algorithm and the plurality of system time is synchronized with a time source. In some implementations, the method further includes receiving the operating data set including the new encrypted time; and generating, by a decryption algorithm, a decrypted time by at least decrypting the new encrypted time. In some implementations, the method further including controlling the operation of the industrial machine based on the operating data set.

In some implementations, a condition monitoring system is configured to receive the data characterizing the plurality of operating parameters from a sensor operatively coupled to the industrial machine, receive the data characterizing the plurality of encrypted times, and generate the operating data set. An encryption system is configured to execute the encryption algorithm, and a decryption system is configured to execute the decryption algorithm. The encryption and the decryption systems are separate from the condition monitoring system. In some implementations, a condition monitoring system is configured to receive the data characterizing the plurality of operating parameters from a sensor operatively coupled to the industrial machine, execute the encryption algorithm to generate the plurality of encrypted times, and generate the operating data set. A decryption system is configured to execute the decryption algorithm, the decryption system is separate from the condition monitoring system. In some implementations, a condition monitoring system is configured to receive the data characterizing the plurality of operating parameters from a sensor operatively coupled to the industrial machine, execute the encryption algorithm to generate the plurality of encrypted times, generate the operating data set, and execute the decryption algorithm.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

These and other capabilities of the disclosed subject matter will be more fully understood after a review of the following figures, detailed description, and claims.

### DESCRIPTION OF DRAWINGS

These and other features will be more readily understood from the following detailed description taken in conjunction with the accompanying drawings, in which:
FIG. 1 is a flowchart of an example method of generating an operating data set that includes operating parameters tagged with encrypted time, in accordance with some example implementations;
FIG. 2 is an example of a condition monitoring system, in accordance with some example implementations;
FIG. 3 illustrates an example temporal configuration, in accordance with some example implementations;
FIG. 4 illustrates another example temporal configuration, in accordance with some example implementations;
FIG. 5 is another example condition monitoring system, in accordance with some example implementations; and
FIG. 6 is another example system, in accordance with some example implementations.

When practical, like labels are used to refer to same or similar items in the drawings

### DETAILED DESCRIPTION

Implementations of the present disclosure are generally directed to monitoring industrial systems. More particularly, implementations of the present disclosure are directed to monitoring industrial systems using a synchronization of operational parameters of an industrial machine with encrypted time. A computing device (e.g., a computer) can include a mechanism to maintain an internal system clock of the computing device. In some implementations, the system clock can be synchronized to an external time source (e.g., indicative of the time zone associated with the computing device). The system clock time can be included in data communications associated with the computing device. For example, a computing device associated with an industrial machine (e.g., a condition monitoring system) can communicate operating data such as vibration data, waveform data associated with the industrial machine. The communicated data can include time information (e.g., time at which the operating data was detected). The operating data can be communicated with a network of computing devices associated with industrial machines in an industrial enterprise (e.g., industrial machines at an oil and gas site).

The timing information communicated among the computing devices of an industrial enterprise can include a time stamp indicative of the internal system clock time (or system time) of the computing devices. The process of data communication (e.g., receiving / transmitting operating data, communicating with other computing device, etc.) can allow an outside party to intercept the data and access the system time of the computing device (or multiple computing devices in the industrial enterprise). The data interception can render the computing device (or network of computing devices) vulnerable to an external attack by the outside party. The prevention (or reduction) of data interception can reduce the vulnerability of the computing device to the external attack. The vulnerability reduction can be achieved, for example, by preventing transmission of system time during data transmission.

In some implementations, data communicated among computing devices can include encrypted time instead of system time. This can prevent an external party from accessing the system time of the computing devices. In some implementation, an encryption algorithm can be synchronized with an external time source that is synchronized with the system time of the computing devices (e.g., the external time generated by the external time source is the same as the system time of the computing devices). The encryption algorithm can generate encrypted time from the external time information provided by the external time source and provide the encrypted time to a computing device. The computing device can tag the operating data (e.g., received from the industrial machine) with the encrypted time based on the time of receiving the operating data and the encrypted time, and transmit the tagged operating data to a second computing device. The second computing device can execute a decryption algorithm that can decrypt the tagged encrypted time to generate the system time of the computing device(s).

Some implementations of condition monitoring system described below can provide a technical solution to the technical problem of transmitting system time over communication channel that can be accessed by an outside party and render the condition monitoring system vulnerable to an external attack. For example, the system time in the communication can be replaced by an encrypted time. In some implementations, the encrypted time can be generated by an encryption algorithm executed outside the condition monitoring system. The condition monitoring system is designed to tag the received encrypted time values with the received operating parameters and transmit an operating data set (that includes the encrypted time and the operating parameters) over the communication channel. As a result, an outside party does not have access to the system time of the condition monitoring system. In some implementations, the condition monitoring system can seamlessly operate for different rates (or periodicity) of the encrypted time and the operating parameters (e.g., different rates at which the encrypted time and the operating parameters are received by the condition monitoring system).

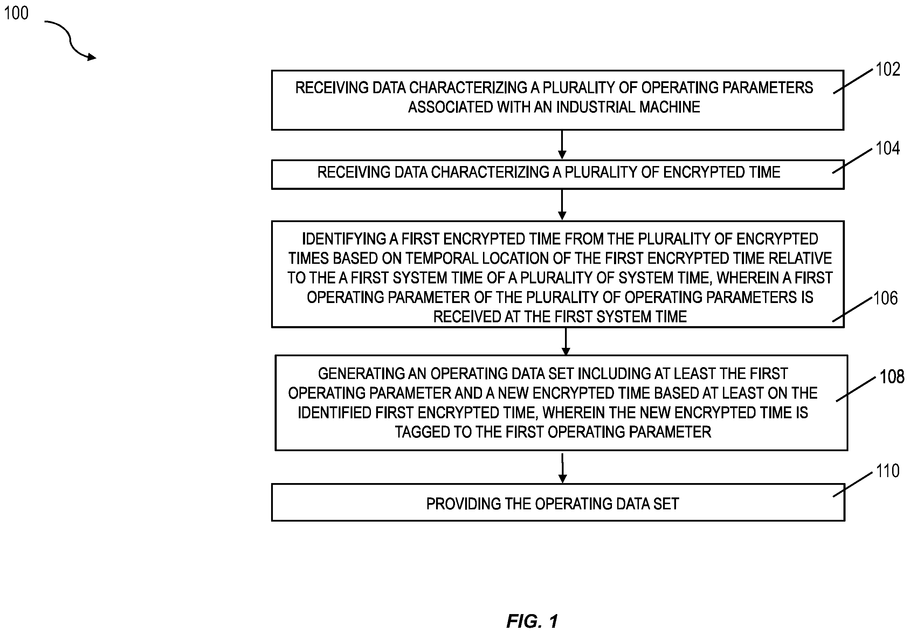

FIG. 1 is a flowchart of an example of a method 100 for generating an operating data set that includes operating parameters tagged with encrypted time.

At step 102, data characterizing a plurality of operating parameters associated with an industrial machine can be received. The operating parameters can be detected by one or more sensors (pressure sensors, temperature sensors, movement sensors, velocity sensors, chemical concentration sensors, volume sensors, or any other types of sensors) operatively coupled to the industrial machine or one or more components (engines, chambers, pipes, compressor, turbine or any type of rotating or moving components) of the industrial machine. The operating parameters can be received, by a condition monitoring system, as packages of parameter variations over time between pair of different time points.

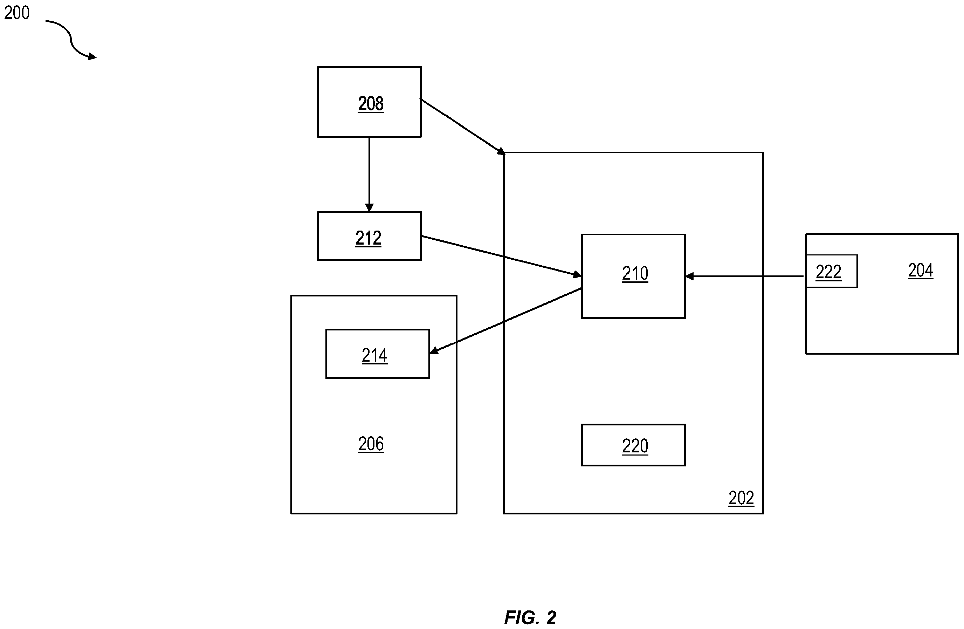

At step 104, data characterizing a plurality of encrypted times can be received. The plurality of encrypted times can be generated by an encrypted time source that can be synchronized with an external time source. The encrypted time source can execute an encryption algorithm that can receive the external time from the external time source and generate the encrypted time. In some implementation, an encryption algorithm can be synchronized with an external time source that is synchronized with the system time of a computing devices, such as a controller of the industrial machine. The external time can be generated by the external time source is the same as the system time of the computing devices). The encryption algorithm can generate encrypted time from the external time information provided by the external time source and provide the encrypted time to the computing device. The operating parameters and the encrypted time are described in detail with reference to FIG. 2.

FIG. 2 shows an example system 200 configured to execute the process described with reference to FIG. 1. The example system 200 can include a condition monitoring system 202 configured to generate operating data set that includes operating parameter tagged to encrypted times. The condition monitoring (CM) system 202 can be communicatively coupled an industrial machine 204 (e.g., coupled to sensors 222 in the industrial machine 204 configured to detect operating parameters of the industrial machine 204). The CM system 202 can receive data characterizing the plurality of operating parameters (that vary as a function of time) associated with an industrial machine 204. The CM system 202 can also be communicatively coupled to a second computing device 206 (e.g., a controller of an industrial machine).

The CM system 202 can be communicatively coupled to an encrypted time source 212. For example, the CM system 202 can receive data characterizing a plurality of encrypted times from the encrypted time source 212. The encrypted time source 212 (encryption module) can be synchronized with an external time source 208 (digital timer or clock). For example, the encrypted source 212 can receive an external time, from the external time source 208, can execute an encryption algorithm using the received external time, and can generate the encrypted time. The encrypted time source 212 can transmit (broadcast) the encrypted time (e.g., periodically broadcast), which can be received by the CM system 202.

The CM system 202 operates on a system time that can by synchronized with an external time source 208. For example, CM 202 can be synchronized with the external time source 208 that provides external time to the encrypted time source 212. Alternately, CM 202 can be synchronized to a second external time source that is synchronized with the external time source 208 (e.g., both the external time source 208 and the second external time source generate the time associated with the local time zone). As a result, the external time generated by the external time source 208 and the system time of the CM system 202 are synchronized.

In some implementations, the plurality of encrypted times and the plurality of system time can be periodic with same or different periodicity. For example, the plurality of encrypted times can be periodically broadcasted at a first rate (e.g., r₁) and can be received by the CM system 202. In other words, temporally adjacent encrypted time broadcast can be separated by a time duration t₁ (where t₁ = 1/n). The plurality of system time can have a rate / periodicity r₂. In other words, a given system time of the plurality of system time can last for a time duration t₂ (where t₂=1/r₂). In some implementations, r₁ can be equal to r₂. As a result, a single encrypted time can be received for a given system time. Alternately, the rate of the plurality of system time (r₂) can be greater than the rate (r₂) at which the broadcasted plurality of encrypted times are received. As a result, the encrypted time may not be received for one or more system time temporally located between a first system time and a second system time, when a first encrypted time and a second encrypted time are received, respectively.

Returning to FIG. 1, at step 106, a first encrypted time can be identified from the plurality of encrypted times received at step 104 (e.g., by the CM system 202 from the encrypted time source 212 described with reference to FIG. 2). The identification of the first encrypted time can be based on temporal location of the first encrypted time relative to a first system time when a first operating parameter is received considering the temporal synchronization of the encrypted time with a respective operating parameter. For example, the identification of the first encrypted time can be based on the system time of the CM system 202 when the first encrypted time is received (e.g., from the encrypted time source 212) relative to the system time when a first operating parameter is received (e.g., from the industrial machine 204).

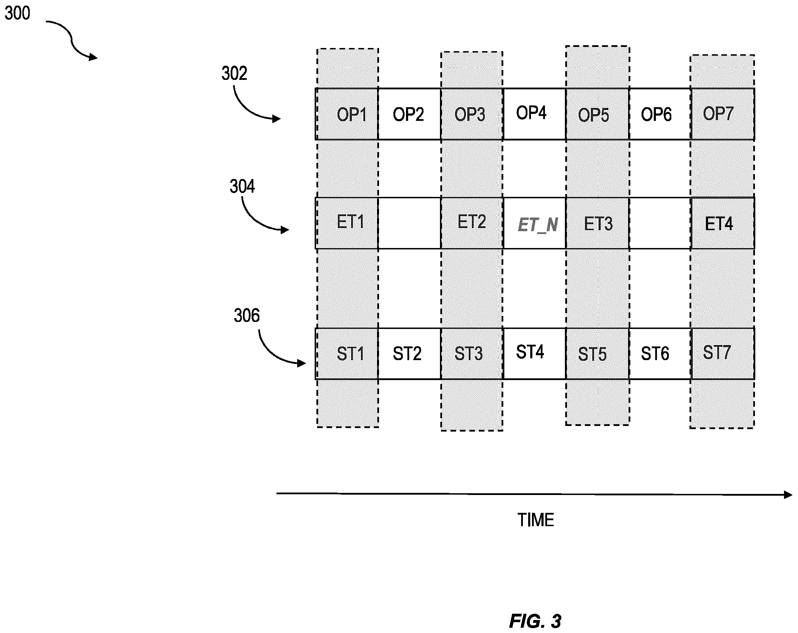

FIG. 3 illustrates an example of a temporal configuration 300, at which various operating parameters (OP) values 302 and encrypted time (ET) values 304 are received relative to system time (ST) values 306 by a condition monitoring system (e.g., CM 202 described with reference to FIG. 2). For example, the first operating parameter OP4 is received at the first system time ST4. In the example configuration, no encrypted time is received during the first system time ST4. In some implementations, an encrypted time for the first system time ST4 can be calculated based on interpolation of encrypted time received at other system time. For example, a first encrypted time ET2 received at second system time ST3 and a second encrypted time ET3 received at third system time ST5 can be identified. In some implementations, an interpolated encrypted time ET_N corresponding to first system time ST4 can be calculated at least by interpolating the first encrypted time ET2 and the second encrypted time ET3. In some implementations, additional encrypted time and the corresponding system time can be identified (e.g., encrypted time ET1 received at system time ST1, encrypted time ET4 received at system time ST7, etc.) and used in interpolation.

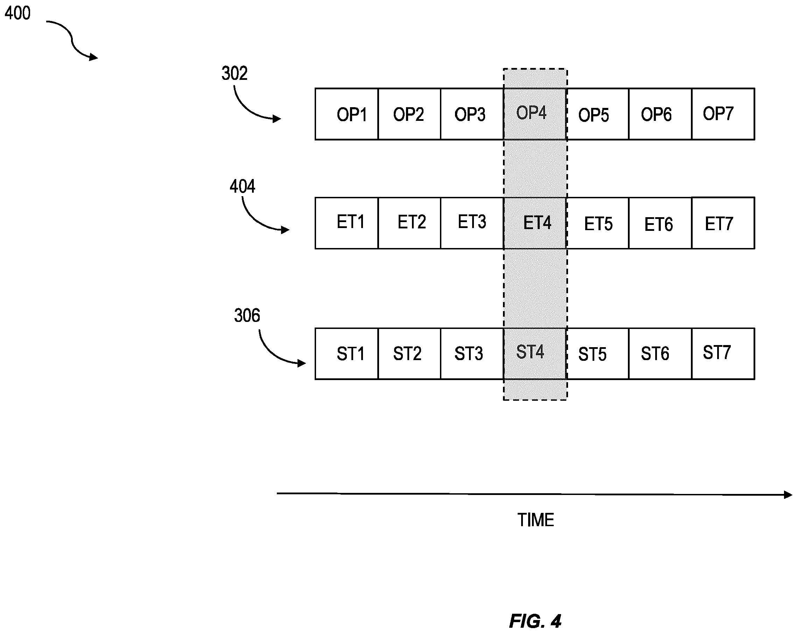

FIG. 4 illustrates another example of a temporal configuration 400 at which various operating parameters values 302 and encrypted time values 404 are received relative to system time values 306 by the condition monitoring system. In this configuration, an encrypted time ET4 is received when an operating parameter OP4 is received (at system time ST4) and there may not be a need to perform an interpolation on encrypted time. In this implementation, the encrypted time ET4 can be identified and used for the generation of an operating data set.

Returning back to FIG. 1, at step 108, an operating data set can be generated using the identified encrypted time. The operating data set can include at least the first operating parameter and a new encrypted time based at least on the identified first encrypted time. For example, as described in FIG. 3, the new encrypted time can be set to the interpolated encrypted time ET_N. The new encrypted time can be based on the first encrypted time ET2 and the second encrypted time ET3. Alternately, as described in FIG. 4, the new encrypted time can be set to the value of the selected encrypted time ET4.

In some implementations, new encrypted time values can be calculated (e.g., based on interpolation) or identified (for multiple operating parameter values, such as operating parameter values OP1-OP7) that are received at various system times (e.g., system time values 306). For example, a new encrypted time can be calculated when a corresponding encrypted time is not available (e.g., as described in FIG. 3) or the encrypted time can be identified when a corresponding encrypted time is available (e.g., as described in FIG. 4). In some implementations, new encrypted times may be calculated for some operating parameter values and identified for other operating parameter values. For example, new encrypted times may be calculated for a first set of operating parameters (e.g., operating parameters OP2, OP4 and OP6) and identified for a second set of operating parameters (e.g., operating parameters OP1, OP3, OP5 and OP7).

The new encrypted time values can be tagged to the corresponding operating parameter values in the operating data set. For example, as illustrated in FIG. 3, new encrypted time values ET1, ET2, ET_N, ET3 and ET4 can be tagged to operating parameter values OP1, OP3, OP4, OP5 and OP7, respectively, in the operating data set. As describe above, the encrypted time (e.g., ET1, ET2, etc.) can be generated by encrypting external time generated by external time source 208. In some implementations, system time (e.g., system time 306) can be synchronized with the external time of the external time source 208. The synchronization can result in a relationship between the encrypted time (e.g., encrypted time values 304) and the system time (e.g., system time values 306), wherein an encrypted time value is generated by encrypting a system time value. For example, as shown in FIG. 3, encrypted time values ET1, ET2, ET3, ET4 can be generated by encrypting system time values ST1, ST3, ST5 and ST7, respectively.

The CM system 202 can include a calculation unit 210 and a memory 220. The calculation unit 210 can execute steps 102-108. For example, the calculation unit 210 can receive the operating parameter values (e.g., OP1-OP7) and encrypted time values (e.g., ET1-ET4), and calculate the operating data set that includes new encrypted time values. In some implementations, the calculation unit 210 may also generate the system time values (e.g., based on external time generated by external time source). The CM system 202 can include a memory 220 that can store various information associated with the generation of the operating data set.

Returning back to FIG. 1, at step 110, the operating data set can be provided (e.g., to a second computing device 206). The second computing device 206 can receive the operating data set and execute a decryption algorithm 214. The decryption algorithm 214 can receive the operating data set including the one or more encrypted time values (e.g., selected from the encrypted time values 304, generated based on interpolation, etc.) and generate corresponding decrypted time values. The decrypted time values can correspond to the system time values (e.g., system time values 306). For example, as illustrated in FIG. 3, decrypting the encrypted time values ET1, ET2, ET_N, ET3 and ET4 can generate system time values ST1, ST3, ST4, ST5 and ST7, respectively. By transmitting the operating data set and by decrypting the encrypted time values, information associated with the operating parameters received by the CM system 202 and the corresponding system time values (e.g., system time values at which the encrypted time values are received) can be transmitted from the CM system 202 to the second computing device 206. Transmission of encrypted time values instead to system time values can reduce the vulnerability of the CM system 202, second computing device 206, etc.

In some implementations, the second computing device 206 can be a controller. The controller can receive the operating parameters and the corresponding encrypted time values and control the operations on an industrial machine (e.g., industrial machine 204, another industrial machine in the industrial enterprise that includes the industrial machine 204, etc.). For example, the controller can stop an industrial machine (e.g., industrial machine 204) when one or more operating parameter values exceed a predetermined threshold value. Alternately, the controller can vary the operating state or operating parameter of the industrial machine, set an alarm, generate a notification, etc., based on the operating parameter values as a function of system time.

The controller can, among other things, monitor operating parameters of the industrial machine 204, send signals to actuate and/or adjust various operating parameters of such industrial machines 204. As shown in FIGS. 2, 5, and 6, the controller included in the second computing device 206 can include one or more processors and a non-transitory computer readable memory storage (e.g., memory) containing instructions that cause the processors to perform operations, such as the process 100 described with reference to FIG. 1. The processors can be coupled to an input/output (I/O) interface for sending and receiving communications with components in the industrial machine 204, including, for example, [SC]: temperature, pressure and flow T2 sensor, the P2 sensor, the T48 sensor, a fuel flow rate sensor. In some implementations, the controller can additionally communicate a status with and send actuation and/or control signals to one or more of the various components (including, for example, a fuel flow pump) of the industrial machine 204, as well as other sensors (e.g., pressure sensors, temperature sensors, vibration sensors and other types of sensors) that provide signals to the industrial machine 204.

The controller can be implemented with various levels of autonomy. In some implementations, the controller can alert an operator that an operating parameter is out of an optimal operating range (defined by a corresponding specification as corresponding to a functional range with low risk of leading to operational defects) during a period of time. For example, emissions that are above a target threshold along a set period of time can be identified in an alert sent to the operator who can adjusts engine parameter to move the emissions below the desired emissions threshold. In some implementations, the controller alerts the operator that an operating parameter is out of the optimal operating range (defined by a corresponding specification) during a period of time, and provides recommendations to the operator to adjust an operation of the industrial machine 204 to adjust the operational parameter to be within the operational range. The operator can select an option and the controller adjusts operations accordingly. In some implementations, the controller can determine that an operating parameter is out of the optimal operating range (defined by a corresponding specification) during a period of time, and can be configured to automatically change or otherwise adjusts operations of the industrial machine 204 to adjust the operating parameter within the optimal operating range with no input from the operator. The automatic adjustment of operating parameters can also prevent the industrial machine 204 from becoming unfunctional.

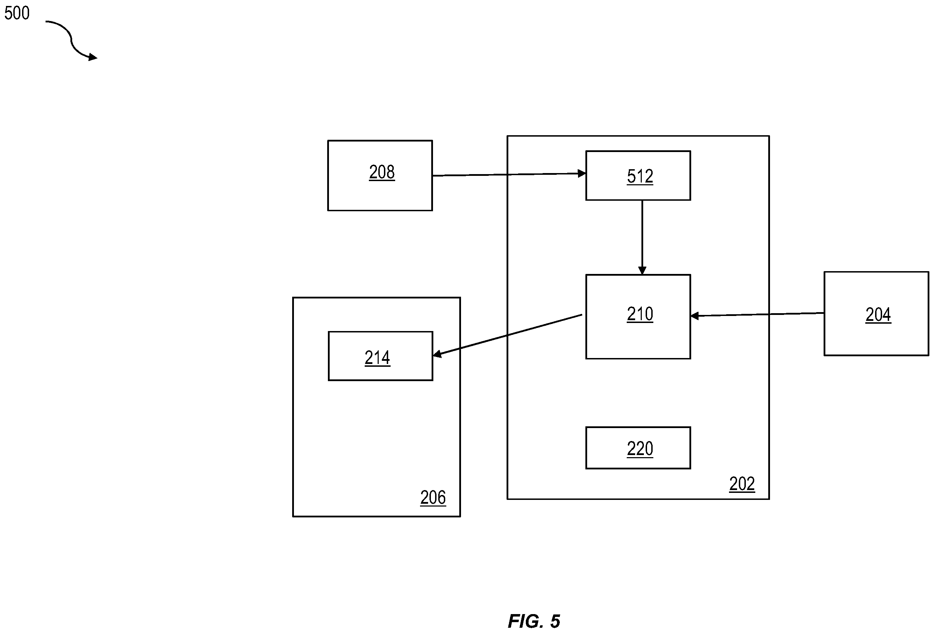

FIG. 5 is another example of a system 500 including an example of a condition monitoring system 202. In the example system 500, the condition monitoring system 202 can be configured to execute an encryption algorithm 512 that can receive an external time from the external time source 208 and generate encrypted time. The encrypted time generated by the encryption algorithm 512 can be received by the calculation unit 210. Additionally, the calculation unit 210 can be configured to receive the data characterizing the plurality of operating parameters from a sensor operatively coupled to the industrial machine 204, and generate the operating data set based on the encrypted time (e.g., generated by the encryption algorithm 512), the received operating parameters and the system time (e.g., as described in steps 102-108 of FIG. 1). The operating data set can be provided to the second computing device 206 that can be configured to include a decryption module 214 configured to execute the decryption algorithm.

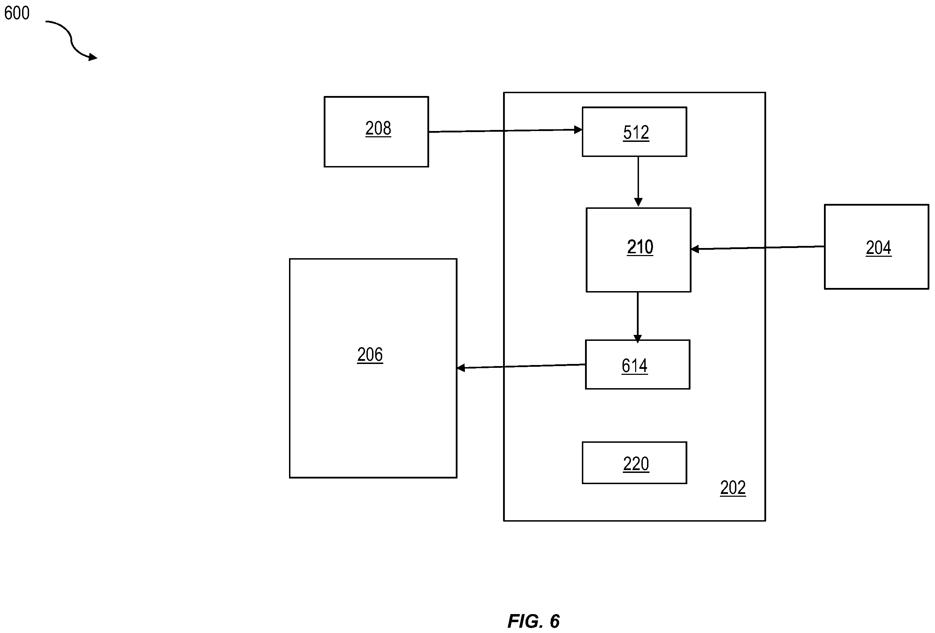

FIG. 6 is another example of a system 600 including an example of a condition monitoring system 202. In the example system 600, the condition monitoring system 202 can execute an encryption algorithm 512 and the decryption algorithm 614. As described above, the encryption algorithm 512 can generate encrypted time that can be received by the calculation unit 210. Additionally, the calculation unit 210 can be configured to generate operating data set (e.g., as described in steps 102-108 of FIG. 1). The operating data set can be provided to the decryption algorithm 614 that can decrypt the encrypted time in the operating data set (e.g., as described in FIG. 3, decrypt the encrypted time values ET1, ET2, ET_N, ET3 and ET4 and generate ST1, ST3, ST4, ST5 and ST7, respectively).

One skilled in the art will appreciate further features and advantages of the subject matter described herein based on the above-described embodiments. Accordingly, the present application is not to be limited specifically by what has been particularly shown and described.

Other embodiments are within the scope of the disclosed subject matter. Those skilled in the art will understand that the systems, devices, and methods specifically described herein and illustrated in the accompanying drawings are non-limiting examples of embodiments and that the scope of the present invention is defined solely by the claims. The features illustrated or described in connection with one exemplary embodiment may be combined with the features of other embodiments. Such modifications and variations are intended to be included within the scope of the present invention.

Further, in the present disclosure, like-named components of the embodiments generally have similar features, and thus within a particular embodiment each feature of each like-named component is not necessarily fully elaborated upon. Additionally, to the extent that linear or circular dimensions are used in the description of the disclosed systems, devices, and methods, such dimensions are not intended to limit the types of shapes that can be used in conjunction with such systems, devices, and methods. A person skilled in the art will recognize that an equivalent to such linear and circular dimensions can easily be determined for any geometric shape.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." In addition, use of the term "based on," above and in the claims is intended to mean, "based at least in part on," such that an unrecited feature or element is also permissible.

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software per se). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web browser through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, may be applied to modify any quantitative representation that could permissibly vary without resulting in a change in the basic function to which it is related. Accordingly, a value modified by a term or terms, such as "about" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

## Claims

1. A method comprising:
receiving data characterizing a plurality of operating parameters associated with an industrial machine;
receiving data characterizing a plurality of encrypted times;
identifying a first encrypted time from the plurality of encrypted times based on temporal location of the first encrypted time relative to a first system time of a plurality of system time, wherein a first operating parameter of the plurality of operating parameters is received at the first system time;
generating an operating data set comprising at least the first operating parameter and a new encrypted time based at least on the first encrypted time, wherein the new encrypted time is tagged to the first operating parameter; and
providing the operating data set.

2. The method of claim 1, further comprising:
identifying a second encrypted time from the plurality of encrypted times based on temporal location of the second encrypted time relative to the first system time, wherein the first encrypted time is received at a second system time and the second encrypted time is received at a third system time;
determining an interpolated encrypted time associated with a first system time at least based on the first encrypted time and the second encrypted time; and
setting the new encrypted time to the interpolated encrypted time.

3. The method of claim 2, wherein the first system time is temporally located between the second system time and the third system time.

4. The method of claim 1, wherein the first encrypted time is received at the first system time, and the new encrypted time is set to the first encrypted time.

5. The method of claim 1, further comprising generating, by an encryption algorithm, the first plurality of encryption times, wherein the encryption algorithm and the plurality of system time is synchronized with a time source.

6. The method of claim 1, further comprising:
receiving the operating data set comprising the new encrypted time; and
generating, by a decryption algorithm, a decrypted time by at least decrypting the new encrypted time.

7. The method of claim 1, wherein a condition monitoring system is configured to receive the data characterizing the plurality of operating parameters from a sensor operatively coupled to the industrial machine, receive the data characterizing the plurality of encrypted times, and generate the operating data set,
wherein an encryption system is configured to execute the encryption algorithm, and a decryption system is configured to execute the decryption algorithm, the encryption and the decryption systems are separate from the condition monitoring system.

8. The method of claim 7, wherein a condition monitoring system is configured to receive the data characterizing the plurality of operating parameters from a sensor operatively coupled to the industrial machine, execute the encryption algorithm to generate the plurality of encrypted times, and generate the operating data set,
wherein a decryption system is configured to execute the decryption algorithm, the decryption system is separate from the condition monitoring system.

9. The method of claim 7, wherein a condition monitoring system is configured to receive the data characterizing the plurality of operating parameters from a sensor operatively coupled to the industrial machine, execute the encryption algorithm to generate the plurality of encrypted times, generate the operating data set, and execute the decryption algorithm.

10. The method of claim 1, further comprising controlling the operation of the industrial machine based on the operating data set.

11. A system comprising:
at least one data processor;
memory coupled to the at least one data processor, the memory storing instructions to cause the at least one data processor to perform operations comprising:
receiving data characterizing a plurality of operating parameters associated with an industrial machine;
receiving data characterizing a plurality of encrypted times;
identifying a first encrypted time from the plurality of encrypted times based on temporal location of the first encrypted time relative to the a first system time of a plurality of system time, wherein a first operating parameter of the plurality of operating parameters is received at the first system time;
generating an operating data set comprising at least the first operating parameter and a new encrypted time based at least on the first encrypted time, wherein the new encrypted time is tagged to the first operating parameter; and
providing the operating data set.

12. The system of claim 11, wherein the operations further comprising:
identifying a second encrypted time from the plurality of encrypted times based on temporal location of the second encrypted time relative to the a first system time, wherein the first encrypted time is received at a second system time and the second encrypted time is received at a third system time;
determining an interpolated encrypted time associated with a first system time at least based on the first encrypted time and the second encrypted time; and
setting the new encrypted time to the interpolated encrypted time.

13. The system of claim 12, wherein the first system time is temporally located between the second system time and the third system time.

14. The system of claim 11, wherein the first encrypted time is received at the first system time, and the new encrypted time is set to the first encrypted time.

15. The system of claim 11, wherein the operations further comprising generating, by an encryption algorithm, the first plurality of encryption times, wherein the encryption algorithm and the plurality of system time is synchronized with a time source.

16. The system of claim 11, wherein the operations further comprising:
receiving the operating data set comprising the new encrypted time; and
generating, by a decryption algorithm, a decrypted time by at least decrypting the new encrypted time.

17. The system of claim 11, wherein a condition monitoring system is configured to receive the data characterizing the plurality of operating parameters from a sensor operatively coupled to the industrial machine, receive the data characterizing the plurality of encrypted times, and generate the operating data set,
wherein an encryption system is configured to execute the encryption algorithm, and a decryption system is configured to execute the decryption algorithm, the encryption and the decryption systems are separate from the condition monitoring system.

18. The system of claim 17, wherein a condition monitoring system is configured to receive the data characterizing the plurality of operating parameters from a sensor operatively coupled to the industrial machine, execute the encryption algorithm to generate the plurality of encrypted times, and generate the operating data set,
wherein a decryption system is configured to execute the decryption algorithm, the decryption system is separate from the condition monitoring system.

19. The system of claim 17, wherein a condition monitoring system is configured to receive the data characterizing the plurality of operating parameters from a sensor operatively coupled to the industrial machine, execute the encryption algorithm to generate the plurality of encrypted times, generate the operating data set, and execute the decryption algorithm.

20. A computer program product comprising a non-transitory machine-readable medium storing instructions that, when executed by at least one programmable processor that comprises at least one physical core and a plurality of logical cores, cause the at least one programmable processor to perform operations comprising:
receiving data characterizing a plurality of encrypted times;
identifying a first encrypted time from the plurality of encrypted times based on temporal location of the first encrypted time relative to the a first system time of a plurality of system time, wherein a first operating parameter of the plurality of operating parameters is received at the first system time;
generating an operating data set comprising at least the first operating parameter and a new encrypted time based at least on the first encrypted time, wherein the new encrypted time is tagged to the first operating parameter; and
providing the operating data set.

## Patentansprüche

1. Verfahren, umfassend:
Empfangen von Daten, die eine Vielzahl von Betriebsparametern kennzeichnen, die einer Industriemaschine zugeordnet sind;
Empfangen von Daten, die eine Vielzahl von verschlüsselten Zeiten kennzeichnen;
Identifizieren einer ersten verschlüsselten Zeit von der Vielzahl von verschlüsselten Zeiten basierend auf einer zeitlichen Lage der ersten verschlüsselten Zeit relativ zu einer ersten Systemzeit einer Vielzahl von Systemzeiten, wobei ein erster Betriebsparameter der Vielzahl von Betriebsparametern zu der ersten Systemzeit empfangen wird;
Erzeugen eines Betriebsdatensatzes, umfassend mindestens den ersten Betriebsparameter und eine neue verschlüsselte Zeit basierend mindestens auf der ersten verschlüsselten Zeit, wobei die neue verschlüsselte Zeit mit dem ersten Betriebsparameter markiert wird; und
Bereitstellen des Betriebsdatensatzes.

2. Verfahren nach Anspruch 1, ferner umfassend:
Identifizieren einer zweiten verschlüsselten Zeit von der Vielzahl von verschlüsselten Zeiten basierend auf der zeitlichen Lage der zweiten verschlüsselten Zeit relativ zu der ersten Systemzeit, wobei die erste verschlüsselte Zeit zu einer zweiten Systemzeit empfangen wird und die zweite verschlüsselte Zeit zu einer dritten Systemzeit empfangen wird;
Bestimmen einer interpolierten verschlüsselten Zeit, die einer ersten Systemzeit mindestens basierend auf der ersten verschlüsselten Zeit und der zweiten verschlüsselten Zeit zugeordnet ist; und
Einstellen der neuen verschlüsselten Zeit auf die interpolierte verschlüsselte Zeit.

3. Verfahren nach Anspruch 2, wobei die erste Systemzeit zeitlich zwischen der zweiten Systemzeit und der dritten Systemzeit gelegen ist.

4. Verfahren nach Anspruch 1, wobei die erste verschlüsselte Zeit zu der ersten Systemzeit empfangen wird und die neue verschlüsselte Zeit auf die erste verschlüsselte Zeit eingestellt wird.

5. Verfahren nach Anspruch 1, ferner umfassend das Erzeugen, durch einen Verschlüsselungsalgorithmus, der ersten Vielzahl von Verschlüsselungszeiten, wobei der Verschlüsselungsalgorithmus und die Vielzahl von Systemzeiten mit einer Zeitquelle synchronisiert werden.

6. Verfahren nach Anspruch 1, ferner umfassend:
Empfangen des Betriebsdatensatzes, umfassend die neue verschlüsselte Zeit; und
Erzeugen, durch einen Entschlüsselungsalgorithmus, einer entschlüsselten Zeit durch mindestens ein Entschlüsseln der neuen verschlüsselten Zeit.

7. Verfahren nach Anspruch 1, wobei ein Zustandsüberwachungssystem konfiguriert ist, um die Daten, die die Vielzahl von Betriebsparametern kennzeichnen, von einem Sensor, der mit der Industriemaschine betriebsfähig gekoppelt ist, zu empfangen, die Daten, die die Vielzahl von verschlüsselten Zeiten kennzeichnen, zu empfangen und den Betriebsdatensatz zu erzeugen,
wobei ein Verschlüsselungssystem konfiguriert ist, um den Verschlüsselungsalgorithmus auszuführen, und ein Entschlüsselungssystem konfiguriert ist, um den Entschlüsselungsalgorithmus auszuführen, wobei das Verschlüsselungs- und das Entschlüsselungssystem von dem Zustandsüberwachungssystem getrennt sind.

8. Verfahren nach Anspruch 7, wobei ein Zustandsüberwachungssystem konfiguriert ist, um die Daten, die die Vielzahl von Betriebsparametern kennzeichnen, von einem Sensor, der mit der Industriemaschine betriebsfähig gekoppelt ist, zu empfangen, den Verschlüsselungsalgorithmus auszuführen, um die Vielzahl von verschlüsselten Zeiten zu erzeugen, und den Betriebsdatensatz zu erzeugen,
wobei ein Entschlüsselungssystem konfiguriert ist, um den Entschlüsselungsalgorithmus auszuführen, wobei das Entschlüsselungssystem von dem Zustandsüberwachungssystem getrennt ist.

9. Verfahren nach Anspruch 7, wobei ein Zustandsüberwachungssystem konfiguriert ist, um die Daten, die die Vielzahl von Betriebsparametern kennzeichnen, von einem Sensor, der mit der Industriemaschine betriebsfähig gekoppelt ist, zu empfangen, den Verschlüsselungsalgorithmus auszuführen, um die Vielzahl von verschlüsselten Zeiten zu erzeugen, den Betriebsdatensatz zu erzeugen und den Entschlüsselungsalgorithmus auszuführen.

10. Verfahren nach Anspruch 1, ferner umfassend ein Steuern des Betriebs der Industriemaschine basierend auf dem Betriebsdatensatz.

11. System, umfassend:
mindestens einen Datenprozessor;
einen Speicher, der mit dem mindestens einen Datenprozessor gekoppelt ist, wobei der Speicher Anweisungen speichert, um den mindestens einen Datenprozessor zu veranlassen, Betriebe durchzuführen, umfassend:
Empfangen von Daten, die eine Vielzahl von Betriebsparametern kennzeichnen, die einer Industriemaschine zugeordnet sind;
Empfangen von Daten, die eine Vielzahl von verschlüsselten Zeiten kennzeichnen;
Identifizieren einer ersten verschlüsselten Zeit von der Vielzahl von verschlüsselten Zeiten basierend auf der zeitlichen Lage der ersten verschlüsselten Zeit relativ zu einer ersten Systemzeit einer Vielzahl von Systemzeiten, wobei ein erster Betriebsparameter der Vielzahl von Betriebsparametern zu der ersten Systemzeit empfangen wird;
Erzeugen eines Betriebsdatensatzes, umfassend mindestens den ersten Betriebsparameter und eine neue verschlüsselte Zeit basierend mindestens auf der ersten verschlüsselten Zeit, wobei die neue verschlüsselte Zeit mit dem ersten Betriebsparameter markiert wird; und
Bereitstellen des Betriebsdatensatzes.

12. System nach Anspruch 11, wobei die Betriebe ferner umfassen:
Identifizieren einer zweiten verschlüsselten Zeit von der Vielzahl von verschlüsselten Zeiten basierend auf der zeitlichen Lage der zweiten verschlüsselten Zeit relativ zu der ersten Systemzeit, wobei die erste verschlüsselte Zeit zu einer zweiten Systemzeit empfangen wird und die zweite verschlüsselte Zeit zu einer dritten Systemzeit empfangen wird;
Bestimmen einer interpolierten verschlüsselten Zeit, die einer ersten Systemzeit mindestens basierend auf der ersten verschlüsselten Zeit und der zweiten verschlüsselten Zeit zugeordnet ist; und
Einstellen der neuen verschlüsselten Zeit auf die interpolierte verschlüsselte Zeit.

13. System nach Anspruch 12, wobei die erste Systemzeit zeitlich zwischen der zweiten Systemzeit und der dritten Systemzeit gelegen ist.

14. System nach Anspruch 11, wobei die erste verschlüsselte Zeit zu der ersten Systemzeit empfangen wird und die neue verschlüsselte Zeit auf die erste verschlüsselte Zeit eingestellt wird.

15. System nach Anspruch 11, wobei die Operationen ferner das Erzeugen, durch einen Verschlüsselungsalgorithmus, der ersten Vielzahl von Verschlüsselungszeiten umfassen, wobei der Verschlüsselungsalgorithmus und die Vielzahl von Systemzeiten mit einer Zeitquelle synchronisiert werden.

16. System nach Anspruch 11, wobei die Betriebe ferner umfassen:
Empfangen des Betriebsdatensatzes, umfassend die neue verschlüsselte Zeit; und Erzeugen, durch einen Entschlüsselungsalgorithmus, einer entschlüsselten Zeit durch mindestens das Entschlüsseln der neuen verschlüsselten Zeit.

17. System nach Anspruch 11, wobei ein Zustandsüberwachungssystem konfiguriert ist, um die Daten, die die Vielzahl von Betriebsparametern kennzeichnen, von einem Sensor, der mit der Industriemaschine betriebsfähig gekoppelt ist, zu empfangen, die Daten, die die Vielzahl von verschlüsselten Zeiten kennzeichnen, zu empfangen und den Betriebsdatensatz zu erzeugen,
wobei ein Verschlüsselungssystem konfiguriert ist, um den Verschlüsselungsalgorithmus auszuführen, und ein Entschlüsselungssystem konfiguriert ist, um den Entschlüsselungsalgorithmus auszuführen, wobei das Verschlüsselungs- und das Entschlüsselungssystem von dem Zustandsüberwachungssystem getrennt sind.

18. System nach Anspruch 17, wobei ein Zustandsüberwachungssystem konfiguriert ist, um die Daten, die die Vielzahl von Betriebsparametern kennzeichnen, von einem Sensor, der mit der Industriemaschine betriebsfähig gekoppelt ist, zu empfangen, den Verschlüsselungsalgorithmus auszuführen, um die Vielzahl von verschlüsselten Zeiten zu erzeugen, und den Betriebsdatensatz zu erzeugen,
wobei ein Entschlüsselungssystem konfiguriert ist, um den Entschlüsselungsalgorithmus auszuführen, wobei das Entschlüsselungssystem von dem Zustandsüberwachungssystem getrennt ist.

19. System nach Anspruch 17, wobei ein Zustandsüberwachungssystem konfiguriert ist, um die Daten, die die Vielzahl von Betriebsparametern kennzeichnen, von einem Sensor, der mit der Industriemaschine betriebsfähig gekoppelt ist, zu empfangen, den Verschlüsselungsalgorithmus auszuführen, um die Vielzahl von verschlüsselten Zeiten zu erzeugen, den Betriebsdatensatz zu erzeugen und den Entschlüsselungsalgorithmus auszuführen.

20. Computerprogrammprodukt, umfassend ein nichtflüchtiges maschinenlesbares Medium, das Anweisungen speichert, die, wenn sie durch mindestens einen programmierbaren Prozessor ausgeführt werden, der mindestens einen physikalischen Kern und eine Vielzahl von logischen Kernen umfasst, den mindestens einen programmierbaren Prozessor veranlassen, Betriebe durchzuführen, umfassend:
Empfangen von Daten, die eine Vielzahl von verschlüsselten Zeiten kennzeichnen;
Identifizieren einer ersten verschlüsselten Zeit von der Vielzahl von verschlüsselten Zeiten basierend auf der zeitlichen Lage der ersten verschlüsselten Zeit relativ zu einer ersten Systemzeit einer Vielzahl von Systemzeiten, wobei ein erster Betriebsparameter der Vielzahl von Betriebsparametern zu der ersten Systemzeit empfangen wird;
Erzeugen eines Betriebsdatensatzes, umfassend mindestens den ersten Betriebsparameter und eine neue verschlüsselte Zeit basierend mindestens auf der ersten verschlüsselten Zeit, wobei die neue verschlüsselte Zeit mit dem ersten Betriebsparameter markiert wird; und Bereitstellen des Betriebsdatensatzes.

## Revendications

1. Procédé comprenant :
la réception de données caractérisant une pluralité de paramètres de fonctionnement associés à une machine industrielle ;
la réception de données caractérisant une pluralité de temps chiffrés ;
l'identification d'un premier temps chiffré parmi la pluralité de temps chiffrés sur la base d'un emplacement temporel du premier temps chiffré par rapport à un premier temps système d'une pluralité de temps système, dans lequel un premier paramètre de fonctionnement de la pluralité de paramètres de fonctionnement est reçu au premier temps système ;
la génération d'un ensemble de données de fonctionnement comprenant au moins le premier paramètre de fonctionnement et un nouveau temps chiffré basé au moins sur le premier temps chiffré, dans lequel le nouveau temps chiffré est étiqueté sur le premier paramètre de fonctionnement ; et
la fourniture de l'ensemble de données de fonctionnement.

2. Procédé selon la revendication 1, comprenant en outre :
l'identification d'un second temps chiffré parmi la pluralité de temps chiffrés sur la base de l'emplacement temporel du second temps chiffré par rapport au premier temps système, dans lequel le premier temps chiffré est reçu à un deuxième temps système et le second temps chiffré est reçu à un troisième temps système ;
la détermination d'un temps chiffré interpolé associé à un premier temps système basé au moins sur le premier temps chiffré et le second temps chiffré ; et
le réglage du nouveau temps chiffré sur le temps chiffré interpolé.

3. Procédé selon la revendication 2, dans lequel le premier temps système est situé temporellement entre le deuxième temps système et le troisième temps système.

4. Procédé selon la revendication 1, dans lequel le premier temps chiffré est reçu au premier temps système, et le nouveau temps chiffré est réglé sur le premier temps chiffré.

5. Procédé selon la revendication 1, comprenant en outre la génération, au moyen d'un algorithme de chiffrement, de la première pluralité de temps de chiffrement, dans lequel l'algorithme de chiffrement et la pluralité de temps système sont synchronisés avec une source de temps.

6. Procédé selon la revendication 1, comprenant en outre :
la réception de l'ensemble de données de fonctionnement comprenant le nouveau temps chiffré ; et
la génération, au moyen d'un algorithme de déchiffrement, d'un temps déchiffré en déchiffrant au moins le nouveau temps chiffré.

7. Procédé selon la revendication 1, dans lequel un système de surveillance d'état est configuré pour recevoir les données caractérisant la pluralité de paramètres de fonctionnement à partir d'un capteur couplé de manière fonctionnelle à la machine industrielle, recevoir les données caractérisant la pluralité de temps chiffrés, et générer l'ensemble de données de fonctionnement.
dans lequel un système de chiffrement est configuré pour exécuter l'algorithme de chiffrement, et un système de déchiffrement est configuré pour exécuter l'algorithme de déchiffrement, les systèmes de chiffrement et de déchiffrement sont distincts du système de surveillance d'état.

8. Procédé selon la revendication 7, dans lequel un système de surveillance d'état est configuré pour recevoir les données caractérisant la pluralité de paramètres de fonctionnement à partir d'un capteur couplé de manière fonctionnelle à la machine industrielle, exécuter l'algorithme de chiffrement pour générer la pluralité de temps chiffrés, et générer l'ensemble de données de fonctionnement,
dans lequel un système de déchiffrement est configuré pour exécuter l'algorithme de déchiffrement, le système de déchiffrement est distinct du système de surveillance d'état.

9. Procédé selon la revendication 7, dans lequel un système de surveillance d'état est configuré pour recevoir les données caractérisant la pluralité de paramètres de fonctionnement à partir d'un capteur couplé de manière fonctionnelle à la machine industrielle, exécuter l'algorithme de chiffrement pour générer la pluralité de temps chiffrés, générer l'ensemble de données de fonctionnement, et exécuter l'algorithme de déchiffrement.

10. Procédé selon la revendication 1, comprenant en outre la commande du fonctionnement de la machine industrielle sur la base de l'ensemble de données de fonctionnement.

11. Système comprenant :
au moins un processeur de données ;
une mémoire couplée à l'au moins un processeur de données, la mémoire stockant des instructions pour amener l'au moins un processeur de données à effectuer des opérations comprenant :
la réception de données caractérisant une pluralité de paramètres de fonctionnement associés à une machine industrielle ;
la réception de données caractérisant une pluralité de temps chiffrés ;
l'identification d'un premier temps chiffré parmi la pluralité de temps chiffrés sur la base de l'emplacement temporel du premier temps chiffré par rapport à un premier temps système de la pluralité de temps système, dans lequel un premier paramètre de fonctionnement de la pluralité de paramètres de fonctionnement est reçu au premier temps système ;
la génération d'un ensemble de données de fonctionnement comprenant au moins le premier paramètre de fonctionnement et un nouveau temps chiffré basé au moins sur le premier temps chiffré, dans lequel le nouveau temps chiffré est étiqueté sur le premier paramètre de fonctionnement ; et
la fourniture de l'ensemble de données de fonctionnement.

12. Système selon la revendication 11, dans lequel les opérations comprennent en outre :
l'identification d'un second temps chiffré parmi la pluralité de temps chiffrés sur la base de l'emplacement temporel du second temps chiffré par rapport au premier temps système, dans lequel le premier temps chiffré est reçu à un deuxième temps système et le second temps chiffré est reçu à un troisième temps système ;
la détermination d'un temps chiffré interpolé associé à un premier temps système basé sur au moins le premier temps chiffré et le second temps chiffré ; et
le réglage du nouveau temps chiffré sur le temps chiffré interpolé.

13. Système selon la revendication 12, dans lequel le premier temps système est situé temporellement entre le deuxième temps système et le troisième temps système.

14. Système selon la revendication 11, dans lequel le premier temps chiffré est reçu au premier temps système, et le nouveau temps chiffré est réglé sur le premier temps chiffré.

15. Système selon la revendication 11, dans lequel les opérations comprennent en outre la génération, au moyen d'un algorithme de chiffrement, de la première pluralité de temps de chiffrement, dans lequel l'algorithme de chiffrement et la pluralité de temps système sont synchronisés avec une source de temps.

16. Système selon la revendication 11, dans lequel les opérations comprennent en outre :
la réception de l'ensemble de données de fonctionnement comprenant le nouveau temps chiffré ; et la génération, au moyen d'un algorithme de déchiffrement, d'un temps déchiffré au moins en déchiffrant le nouveau temps chiffré.

17. Système selon la revendication 11, dans lequel un système de surveillance d'état est configuré pour recevoir les données caractérisant la pluralité de paramètres de fonctionnement à partir d'un capteur couplé de manière fonctionnelle à la machine industrielle, recevoir les données caractérisant la pluralité de temps chiffrés, et générer l'ensemble de données de fonctionnement.
dans lequel un système de chiffrement est configuré pour exécuter l'algorithme de chiffrement, et un système de déchiffrement est configuré pour exécuter l'algorithme de déchiffrement, les systèmes de chiffrement et de déchiffrement sont distincts du système de surveillance d'état.

18. Système selon la revendication 17, dans lequel un système de surveillance d'état est configuré pour recevoir les données caractérisant la pluralité de paramètres de fonctionnement à partir d'un capteur couplé de manière fonctionnelle à la machine industrielle, exécuter l'algorithme de chiffrement pour générer la pluralité de temps chiffrés, et générer l'ensemble de données de fonctionnement,
dans lequel un système de déchiffrement est configuré pour exécuter l'algorithme de déchiffrement, le système de déchiffrement est distinct du système de surveillance d'état.

19. Système selon la revendication 17, dans lequel un système de surveillance d'état est configuré pour recevoir les données caractérisant la pluralité de paramètres de fonctionnement à partir d'un capteur couplé de manière fonctionnelle à la machine industrielle, exécuter l'algorithme de chiffrement pour générer la pluralité de temps chiffrés, générer l'ensemble de données de fonctionnement, et exécuter l'algorithme de déchiffrement.

20. Produit-programme informatique comprenant un support non transitoire lisible par machine stockant des instructions qui, lorsqu'elles sont exécutées par au moins un processeur programmable qui comprend au moins un coeur physique et une pluralité de coeurs logiques, amènent l'au moins un processeur programmable à effectuer des opérations comprenant :
la réception de données caractérisant une pluralité de temps chiffrés ;
l'identification d'un premier temps chiffré parmi la pluralité de temps chiffrés sur la base de l'emplacement temporel du premier temps chiffré par rapport à un premier temps système de la pluralité de temps système, dans lequel un premier paramètre de fonctionnement de la pluralité de paramètres de fonctionnement est reçu au premier temps système ;
la génération d'un ensemble de données de fonctionnement comprenant au moins le premier paramètre de fonctionnement et un nouveau temps chiffré basé au moins sur le premier temps chiffré, dans lequel le nouveau temps chiffré est étiqueté sur le premier paramètre de fonctionnement ; et la fourniture de l'ensemble de données de fonctionnement.
